# EUROPEAN PATENT APPLICATION

(11) **EP 2 535 222 A1**
(43) Date of publication of application: **19.12.2012**
(21) Application number: 12162193.2
(22) Date of filing: 29.03.2012
(51) Int. Cl.: B60N 3/10, F16L 33/22

(54) **Device for heating and cooling beverages in vehicles**

(30) Priority: 13.06.2011 ES 201130642 U
(71) Applicant: Iglesias Soto, Luis, 32516 Ourense (ES)
(72) Inventor: Iglesias Soto, Luis, 32516 Ourense (ES)
(74) Representative: Isern-Jara, Nuria

(57) **Abstract**

The present invention relates to a device for heating or cooling beverages in vehicles, whose purpose is to serve as a means for heating or cooling the liquid contained in a small container, thereby being of great use and service in any type of vehicle that includes air conditioning and heating. In particular, the device of the invention allows a beverage (coffee, baby bottle, soft drink, water, etc.) to be consumed at a given moment at an optimum temperature by simply connecting the device to the air conditioning or heating vent of the vehicle in which it is fitted (depending on whether the drink is to be cooled or heated).
The device for heating or cooling beverages is constituted by a container (1), with a lid (2) on the top and a wide hole on one of its sides for the attachment thereof to the heating or air conditioning vent of the vehicle, the connection being made by clips (7) which emerge from the rim (8) of the hole.

## Description

### OBJECT OF THE INVENTION

The present invention relates to a device for heating or cooling beverages in vehicles, whose clear purpose is to serve as a means for heating or cooling, depending on what is desired, the liquid contained in a small container, such as a bottle, can, etc..., thereby being of great use and service in any type of vehicle that includes air conditioning and heating, be it a car, van, truck, etc.

The object of the invention is that at a given moment a beverage (coffee, baby bottle, soft drink, water, etc.) may be consumed at the optimum temperature by simply connecting the device to the air conditioning or heating vent of the vehicle in which it is fitted (depending on whether the drink is to be cooled or heated).

### PRECEDENTS OF THE INVENTION

There is no doubt that cold refreshments and sometimes hot beverages are often consumed on journeys in vehicles, be they cars, vans, lorries, etc. Although the beverages may be cold when leaving home, very quickly they become room temperature, i.e. the cold beverages warm up and the hot ones cool down, such that they are consumed under conditions which are undesirable for the consumer.

### DESCRIPTION OF THE INVENTION

The proposed device is designed to solve the problem described above, based on a simple but effective solution.

More specifically, the device of the invention, to be used for either heating or cooling a beverage in a small, suitably closed vessel, is formed by a container, preferably of a rectangular prismatic configuration, with a lid on its upper base, suitably hinged, while the inside contains lateral steel support arms for securing the inserted vessel, and which contains the liquid to be heated up or cooled down.

Clearly, the vessel containing the liquid can be a thermos flask, a small container with a seal containing coffee, a drinks can, a bottle of water, etc., which one may wish to consume at a given temperature, hot or cold.

The container with the inner lateral support arms for holding the vessel that contains the liquid which is to be heated or cooled is made preferably of PVC, without ruling out other materials, and in particular the back wall has a wide hole which is fitted to the corresponding air conditioning or heating vent; the mouth defined by the wide hole of the container is attached to the hose of the air conditioning or heating vent by means of clips which act as pincers, and which emerge from the rim of the container's hole, with the special feature that a gasket of foam rubber is included, corresponding to the outer rim of the hole, to ensure that the air, whether hot or cold, enters fully into the container. The aforementioned gasket slides on by means of a guide or rail established for that purpose at the outer edges of the hole.

On the face or front wall, i.e. opposite to the inlet of the hot or cold air, the container has holes that allow air to circulate and facilitate heating or cooling evenly across the whole surface of the vessel which has been inserted; the vessel in question is heated or cooled evenly and effectively as it is suspended between the lateral support arms and inside the container.

On its sides, the container incorporates flexible, adaptable tabs which allow the attachment thereof to different types of heating or air conditioning vents.

In this way, if someone wishes to consume a cold drink during the journey or trip, all they need to do is simply insert the vessel containing the drink in the container constituted by the device, and consume the drink at a time when they see fit; similarly for a vessel or container of hot drink, such as coffee or likewise.

In either case, the cooling will take place, logically, when the vehicle's air conditioning is running and the device is attached in the aforementioned way to one of the vents, whichever is most convenient. Equally, if heating is required, the vehicle's heating must be turned on, and the device must be attached likewise to one of the heating vents.

Regarding heating and cooling times, approximately 20 minutes is the estimated time that is necessary to cool products from 25 ºC to 5ºC, and to heat products from 25ºC to 75ºC, with the air at a medium setting.

### DESCRIPTION OF THE DRAWINGS

By way of complementing the description that follows, and with the aim of facilitating understanding of the characteristics of the invention, according to an example of a practical preferred embodiment thereof, this description is accompanied by a set of drawings which include, but are not limited to, the following features:

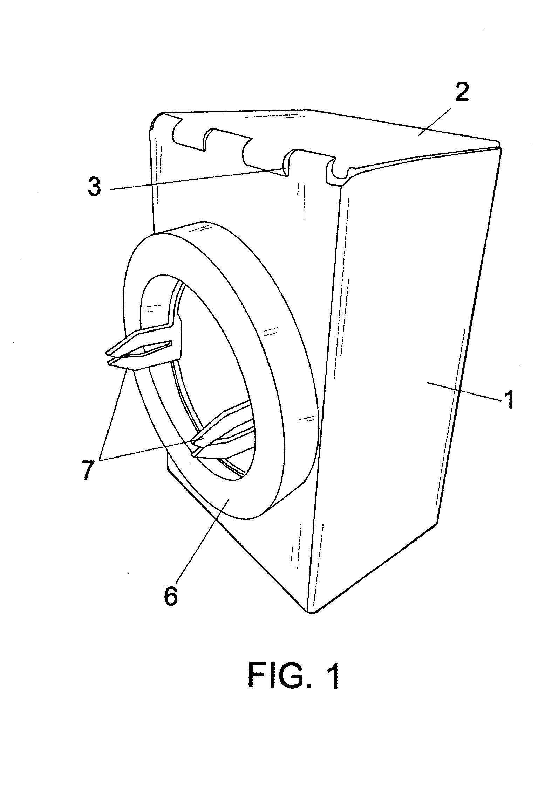

Figure 1 is a representation corresponding to a general view of the container object of the invention, in which the back of the container with the hole, the clips for connecting to the heating or air conditioning vent, and the incorporated foam rubber gasket are shown.
Figure 2 is a front perspective view of the same container represented in the previous figure, with the lid slightly open.
Figure 3 is a top perspective view of the container represented in the previous figures, with the lid open, allowing the lateral support pieces which hold the vessel containing the liquid to be heated or cooled to be seen, along with the hole which attaches to the air conditioning or heating vent.
Figure 4 is a side perspective view of the container with the flexible adaptable tabs for attaching onto other types of air vents in the vehicle within which it is used.

### PREFERRED EMBODIMENT OF THE INVENTION

As shown in the referred drawings, the device of the invention is constituted by a container (1) which, in the embodiment shown, is of a rectangular prismatic configuration, and is made preferably of PVC, without ruling out any other type of suitable material.

The aforementioned container (1) presents a lid (2) on top, which is fitted with a hinge (3) for opening and closing.

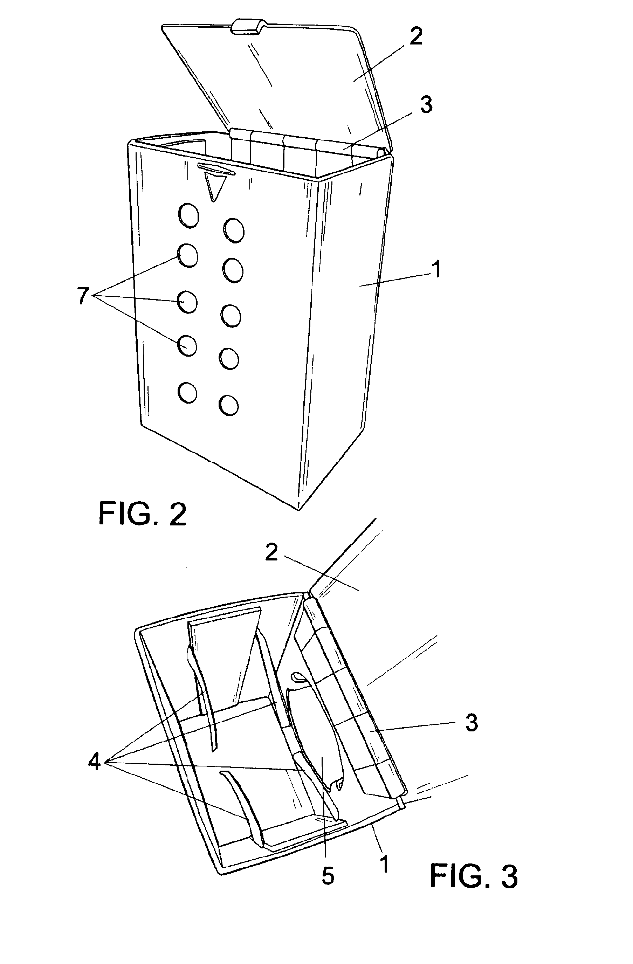

Inside the container (1) steel side support arms (4) are provided, which constitute a holder for a vessel containing the drink which is to be heated or cooled; the vessel, either a can, small carton, etc., is suspended between the aforementioned side support arms (4) which can be seen clearly in figure 3.

In the side considered to be the back of the container (1) there is a fairly wide hole (5) for attaching to the corresponding air conditioning or heating vent; a hole (5) which presents on its outer rim a gasket (6) of foam rubber, and on its edge clips (7) which act like pincers, through which the connection to the hose of the corresponding air conditioning or heating vent is made, such that the gasket (6) ensures that the flow of air from the heating or air conditioning fully penetrates the inside of the container (1) in order for the vessel held in the container between the steel support arms (4) to be heated or cooled.

The foam rubber gasket slides on by means of a guide or rail (10) provided for that purpose at the outer edges of the hole.

On the front, i.e. opposite the hole (5) whereby the hot or cold air enters, the container has small holes (7) that allow an optimum circulation of the air inside the container itself (1), thereby facilitating heating or cooling evenly across the whole surface of the introduced vessel, i.e. the vessel which contains the liquid that is to be heated or cooled.

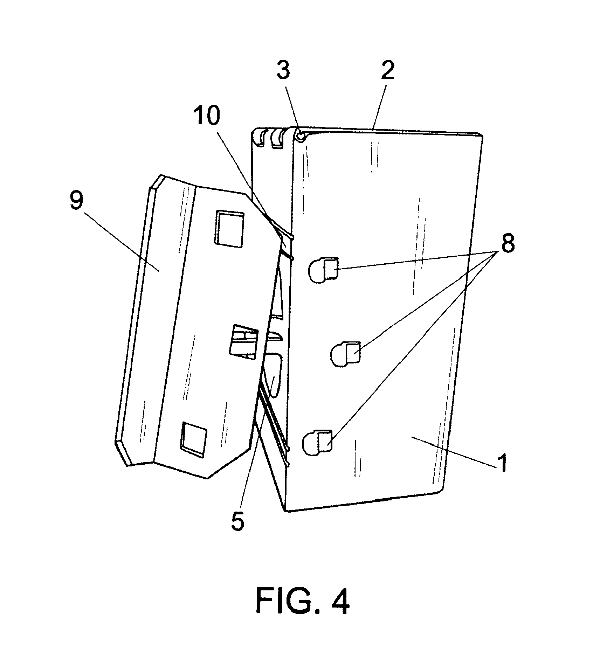

In a variant of the embodiment shown in figure 4, flexible adaptable tabs (8) have been provided on the sides of the container (1) to allow the connection to other types of air conditioning or heating vents (9) in the vehicle where the device is used.

## Claims

1. Device for heating or cooling beverages in vehicles, to be used in any kind of vehicle, be it a car, van, lorry or likewise, which includes heating and air conditioning, **characterized in that** it is constituted by a container of a general prismatic configuration, with a lid on top and a wide hole on one of its sides for the attachment thereof to the heating or air conditioning vent of the vehicle, the connection being made by clips which emerge from the rim of the hole, and which, acting like pincers, fix the container to the heating or air conditioning vent, and with the special feature that inside the container are steel support arms which hold a vessel, such as a can, pot or small carton, containing the beverage to be heated or cooled.

2. Device for heating or cooling beverages in vehicles as according to claim 1, **characterized in that** on the outer rim of the hole which connects to the heating or air conditioning vent there is a foam rubber gasket which ensures that the air enters fully into the container.

3. Device for heating or cooling beverages in vehicles, according to claim 2, **characterized in that** on the outer rim of the hole which connects to the air vent, there is a guide or rail by which the foam rubber gasket slides on.

4. Device for heating or cooling beverages in vehicles, according to any of the preceding claims, **characterized in that** on the side opposite the hole which attaches to the heating or air conditioning vent, the container has small holes which allow a suitable circulation of air inside the container, thereby facilitating heating or cooling of the whole surface of the vessel held between the steel inner support arms.

5. Device for heating or cooling beverages in vehicles, according to any of the preceding claims, **characterized in that** the sides of the prismatic body are fitted with flexible tabs which are adaptable to different types of heating or air conditioning vents.

6. Device for heating or cooling beverages in vehicles, according to any of the preceding claims, **characterized in that** the container is made preferably of PVC or other suitable materials.
